# EUROPEAN PATENT APPLICATION

(11) **EP 4 576 520 A1**
(43) Date of publication of application: **25.06.2025**
(21) Application number: 24212013.7
(22) Date of filing: 11.11.2024
(51) Int. Cl.: H02K 9/19, H02K 5/22

(54) **MOTOR**

(30) Priority: 19.12.2023 JP 2023213832
(71) Applicant: TOYOTA JIDOSHA KABUSHIKI KAISHA, Aichi-ken, 471-8571 (JP)
(72) Inventor: IMAKAWA, Takashi, Toyota-shi, 471-8571 (JP); YOSHIKAWA, Makoto, Toyota-shi, 471-8571 (JP)
(74) Representative: TBK

(57) **Abstract**

A stator core (8), a coil (14), a plurality of terminals (32), at least one coolant supply channel (20;120), and a terminal cooling path (40;140;240;340;440) are included. The stator core (8) extends in an axial direction of a motor (2). The coil (14) is wound around the stator core (8). The terminals (32) are configured to be connected to the coil (14). The at least one coolant supply channel (20;120) is disposed along an outer periphery of the stator core (8). The terminal cooling path (40;140;240;340;440) is provided in the coolant supply channel (20;120) and is configured to supply coolant to the terminals (32).

## Description

### BACKGROUND OF THE INVENTION

### 1. Field of the Invention

The present disclosure relates to a motor.

### 2. Description of Related Art

A motor includes a stator in which coils of three phases are wound around a stator core, and a rotor. On an outer side of the stator core along an axial direction thereof, ends of the coils extending outward are connected to each other by welding to form coil ends. Cooling pipes are provided for these coil ends, as supply paths for coolant on right and left sides of an outer periphery of the stator core. The cooling pipes have one or more openings formed at an end portion and along an extending direction of the cooling pipes, for discharging the coolant to cool the coil ends and the stator core (U.S. Patent Application Publication No. 2021/0067006).

### SUMMARY OF THE INVENTION

Conductors extending from bus bars are further connected to an inverter or the like via a terminal block disposed on an outer periphery of the stator core. The conductors may carry high-voltage currents in some cases, causing the terminal block to heat up along with the conductors. The cooling pipes are located on the right and left sides of the terminal block, and accordingly the terminal block is not sufficiently cooled.

The present disclosure provides a motor that suppresses or circumvents heating of multiple terminals or terminal blocks.

A motor according to an aspect of the present disclosure includes a stator core, a coil, a plurality of terminals, at least one coolant supply channel, and a terminal cooling path. The stator core extends in an axial direction of the motor. The coil is wound around the stator core. The terminals are configured to be connected to the coil. The at least one coolant supply channel is disposed along an outer periphery of the stator core. The terminal cooling path is provided in the coolant supply channel and is configured to supply coolant to the terminals.

According to the motor, the coolant supply channel includes the terminal cooling path that supplies coolant to the terminals, and accordingly the multiple terminals are effectively cooled.

In the motor according to an aspect of the present disclosure, the terminal cooling path may accommodate the terminals and be disposed so as to allow the coolant to flow among the terminals.

In the motor according to an aspect of the present disclosure, the terminal cooling path may be disposed so as to supply the coolant to at least one of the stator core and a coil end. The coil end may be included in the coil and exposed from an end portion of the stator core in the axial direction.

In the motor according to an aspect of the present disclosure, the terminal cooling path may include at least one discharge port configured to discharge the coolant to at least one of the stator core and the coil end.

In the motor according to an aspect of the present disclosure, the terminals may be arrayed laterally in a row parallel to a tangent line of an end portion of the stator core that is closest to the terminals.

In the motor according to an aspect of the present disclosure, the at least one coolant supply channel may include two coolant supply channels. The two coolant supply channels may be disposed at both end sides of the terminals, along an array direction of the terminals.

In the motor according to an aspect of the present disclosure, the stator core may be disposed along a rotation axis of the motor. The rotation axis may be an axis perpendicular to a vertical direction. The at least one coolant supply channel may be disposed along the axial direction of the stator core. The terminals may be arrayed along a horizontal direction upward from the stator core. The terminal cooling path may accommodate the terminals and be disposed so as to allow the coolant to flow among the terminals.

In the motor according to an aspect of the present disclosure, the terminal cooling path may include an end portion extending along a peripheral direction of the stator core.

In the motor according to an aspect of the present disclosure, the at least one coolant supply channel may include two coolant supply channels along the axial direction of the stator core. The two coolant supply channels may be disposed at the same height as each other. The terminal cooling path may bridge the two coolant supply channels.

In the motor according to an aspect of the present disclosure, the terminal cooling path may be disposed at the same height as the at least one coolant supply channel.

In the motor according to an aspect of the present disclosure, the terminal cooling path may include a recessed or hollow channel that accommodates the terminals and that also is open upward and communicates with the at least one coolant supply channel.

In the motor according to an aspect of the present disclosure, the terminal cooling path may include at least one discharge port configured to discharge the coolant to at least one of the stator core and a coil end. The coil end may be included in the coil and exposed from an end portion of the stator core in the axial direction.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A is a diagram illustrating a stator core, a terminal block, a coolant supply channel, and a terminal cooling path, in a motor, as viewed from one coil end side;
FIG. 1B is a diagram illustrating flow of a coolant in a terminal cooling path;
FIG. 2 is a cross-sectional view taken along line II-II of the motor illustrated in FIG. 1A;
FIG. 3 is a plan view of the motor illustrated in FIG. 1A;
FIG. 4 is a diagram illustrating another form of a terminal cooling path;
FIG. 5 is a diagram illustrating another form of a coolant supply channel and a terminal cooling path;
FIG. 6 is a diagram illustrating another form of a terminal cooling path;
FIG. 7 is a diagram illustrating another form of a terminal cooling path; and
FIG. 8 is a plan view illustrating another form of a coolant supply channel and a terminal cooling path.

### DETAILED DESCRIPTION OF EMBODIMENTS

One embodiment of a motor disclosed in the present specification includes a stator core that extends in an axial direction, a coil that is wound around the stator core, a plurality of terminals connected to the coil, and at least one coolant supply channel that is disposed along an outer periphery of the stator core, and the coolant supply channel may include a terminal cooling path that supplies coolant to the terminals.

Another embodiment of the motor includes the terminal cooling path accommodates the terminals and being formed so as to allow the coolant to flow among the terminals. Thus, multiple terminals can be effectively cooled.

In another embodiment of the motor, the terminal cooling path may be formed so as to be capable of supplying the coolant to the stator core and/or a coil end in which the coil is exposed from an end portion of the stator core in an axial direction. Also, the terminal cooling path may include at least one discharge port that discharges the coolant to the stator core and/or the coil end. Thus, the stator core and/or the coil end are also effectively cooled.

In another embodiment of the motor, the terminals may be arrayed laterally in a row parallel to a tangent line of an end portion of the stator core that is closest to the terminals. Thus, the terminals can be efficiently cooled.

In another embodiment of the motor, the at least one coolant supply channel may include two coolant supply channels that are disposed at both end sides of the terminals, along an array direction of the terminals. This allows a greater amount of coolant to be supplied to the terminal cooling path.

In another embodiment of the motor, an arrangement may be made in which the motor has a center of rotation that is substantially perpendicular to a vertical direction, the at least one coolant supply channel includes two coolant supply channels disposed along the axial direction of the stator core that is disposed along the center of rotation, at substantially the same height as each other, the terminals are arrayed along a substantially horizontal direction upward from the stator core, and the terminal cooling path bridges the two coolant supply channels along the substantially horizontal direction. Also, the terminal cooling path may be disposed at the same height as the two coolant supply channels. This enables effective utilization of space in the vicinity of the outer periphery of the stator core in the motor having a center of rotation that is substantially perpendicular to the vertical direction, and the coolant can be efficiently supplied to the terminals.

In another embodiment of the motor, the terminal cooling path may include a recessed or hollow channel that accommodates the terminals and that also is open upward and communicates with the two coolant supply channels. Also, the terminal cooling path may include at least one discharge port that discharges the coolant to the stator core and/or the coil end. Thus, the terminals can be cooled in a sure manner.

In another embodiment of the motor, an arrangement may be made in which the motor has a center of rotation that is substantially perpendicular to the vertical direction, the at least one coolant supply channel, the at least one coolant supply flow passage is disposed along the axial direction of the stator core that is disposed along the center of rotation, the terminals are arrayed along a substantially horizontal direction upward from the stator core, and the terminal cooling path accommodates the terminals and is formed to allow the coolant to flow among the terminals. This enables the terminal cooling path to be disposed compactly around the stator core.

In this embodiment, the terminal cooling path may have an end portion extending along the peripheral direction of the stator core. This enables the terminal cooling path to be disposed compactly around the stator core, and also is convenient for discharging the coolant to the coil ends.

In this embodiment, the at least one coolant supply channel may include two coolant supply channels disposed at substantially the same height as each other along the axial direction of the stator core, and the terminal cooling path may bridge the two coolant supply channels. This enables a greater amount of coolant to be efficiently supplied to the terminal cooling path.

In this embodiment, the terminal cooling path may be disposed at the same height as the two coolant supply channels. This enables a simple configuration of the cooling structure.

In this embodiment, the terminal cooling path may include a recessed or hollow channel that accommodates the terminals and that also is open upward and communicates with the two coolant supply channels. This ensures that the terminals are cooled.

In this embodiment, the terminal cooling path may have at least one discharge port that discharges the coolant to the stator core and/or the coil end in which the coil is exposed from the end portion of the stator core in the axial direction. This enables the coil ends to be cooled as well as the terminals.

A motor disclosed in the present specification will be described below with reference to the drawings as appropriate. In the specification, the motor is not limited in particular, but may be, for example, a traction motor installed in an electrified vehicle, or may be part of an e-Axle or the like. The electrified vehicle may be a battery electric vehicle (BEV), a hybrid electric vehicle (HEV), a plug-in hybrid electric vehicle (PHEV), a fuel cell electric vehicle (FCEV), or the like. An upper side of the motor in a gravitational direction when installed in a vehicle is referred to as the "upper side in vertical direction," and a lower side in the gravitational direction is referred to as the "lower side in vertical direction." Also, in the present specification, simply referring to "axial direction" means an axial direction of a stator or stator core that the motor is equipped with, simply referring to "peripheral direction" means a peripheral direction of the stator or stator core, and simply referring to "radial direction" means a radial direction of the stator or stator core.

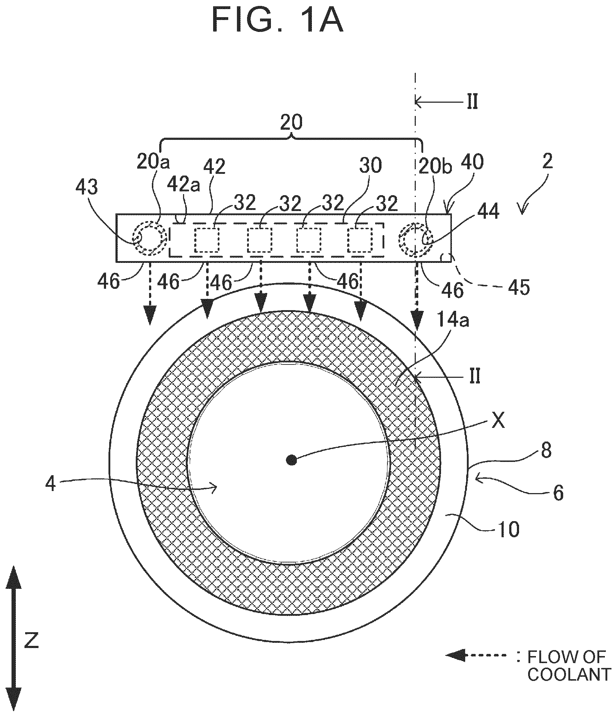

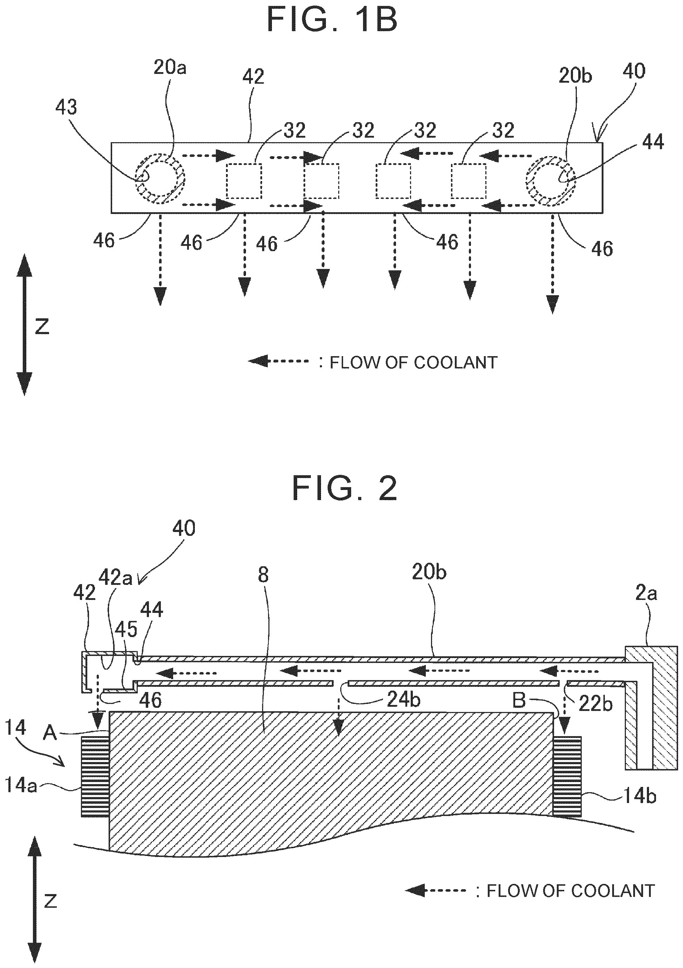

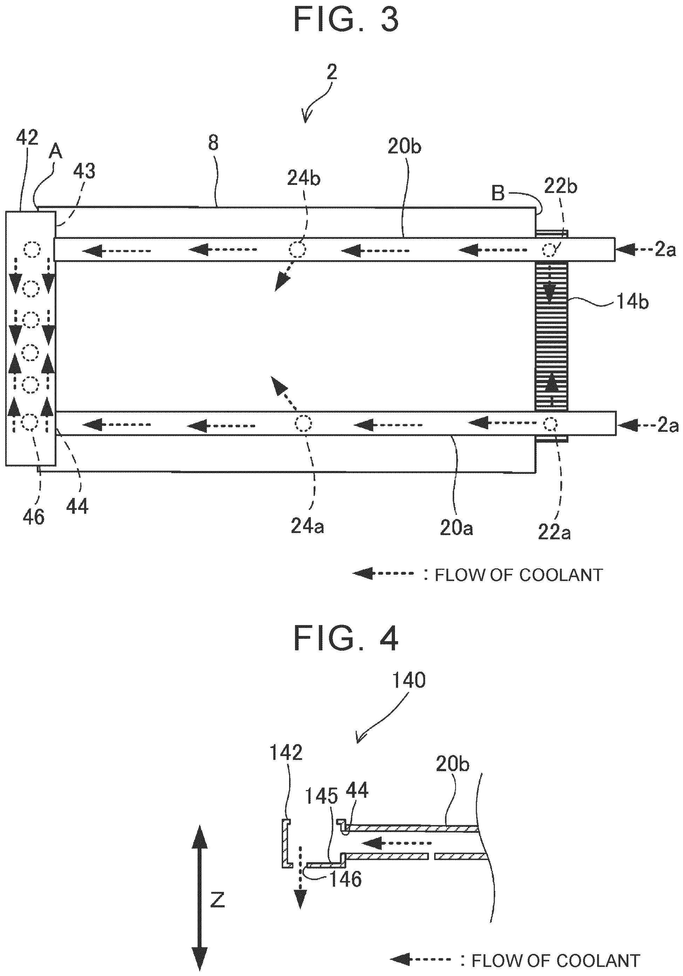

FIG. 1A illustrates a front view of a motor 2 installed in a vehicle, as viewed from an end portion A, which is one coil end side of a stator 6, FIG. 1B is an enlarged view illustrating flow of coolant in a terminal cooling path 40, FIG. 2 is a cross-sectional view of the motor 2 taken along line II-II in FIG. 1A, and FIG. 3 is a plan view of the motor 2. Note that in the drawings, the vertical direction in the present specification is indicated by Z. Also, in the drawings, arrows indicate the flow of the coolant.

The motor 2 includes a rotor 4, the stator 6, a coolant supply channel 20, a terminal block 30, and a terminal cooling path 40. The motor illustrated in FIGS. 1A to 3 has a rotation axis X that is perpendicular to a line extending up and down in the vertical direction, and the stator 6 that is disposed along this rotation axis X has a stator core 8. The stator core 8 is a substantially annular member with respect to the rotation axis X of the motor 2, and is made up of stacked steel plates and so forth, for example. The rotor 4 is disposed in a middle hole portion of the stator core 8. The stator core 8 has a plurality of teeth (omitted from illustration) protruding in the radial direction from an inner peripheral face of a back yoke 10 that has an annular shape with a predetermined width, and slots (omitted from illustration) formed between the teeth.

A coil 14 is made up by winding a conducting wire around the teeth of the stator core 8. Note that in FIGS. 1A to 3, the coil 14 and a coil end 14a are illustrated in a simplified manner. Connection forms and so forth of the conducting wire for forming the coil 14 are not limited in particular. The coil 14 is made up of a coil group of three phases (omitted from illustration), which are U-phase, V-phase, and W-phase. The coil 14 has coil ends 14a and 14b that protrude from the stator core 8 at the end portion A, which is the end portion of the stator core 8 on one side in the axial direction, and an end portion B, which is the end portion on the other side thereof. The coil ends 14a are welded to the coils 14 of the same phase, which are wound with a space therebetween in the peripheral direction.

The coolant supply channel 20 is a conduit for discharging the coolant supplied from the outside into the motor 2. The coolant supply channels 20 extend in the axial direction at two predetermined positions on an outer periphery of the stator core 8, on the upper side of the stator core 8 in the vertical direction. In the present embodiment, the motor 2 has two coolant supply channels 20a and 20b. These coolant supply channels 20a, 20b each extend from the vicinity of the end portion B of the stator core 8 to the vicinity of the end portion A. These coolant supply channels 20a and 20b are disposed at positions at the same height on the outer periphery of the stator core 8, spaced apart from each other within ±70 degrees, with a position directly above the stator core 8 defined as 0 degrees.

The coolant that circulates within the motor 2 and a casing 2a that accommodates the motor 2 is supplied to the coolant supply channels 20a and 20b. In the present embodiment, the coolant is supplied to the coolant supply channels 20a and 20b via the casing 2a by a pump or the like, and flows from the other side in the axial direction (end portion B side) to the one side in the axial direction (end portion A side).

The coolant supply channels 20a and 20b are provided with discharge ports 22a and 22b that discharge the coolant toward the coil ends 14b, and discharge ports 24a and 24b that discharge the coolant toward the stator core 8. Opening positions of the discharge ports 22a, 22b, 24a, and 24b on the peripheral walls of the coolant supply channels 20a and 20b are not limited in particular, but are opened downward or diagonally downward in the vertical direction on peripheral walls of the coolant supply channels 20a and 20b so as to discharge the coolant to the coil end 14b and the stator core 8.

Note that the coolant is not limited in particular, and any known oil-based liquid that can be used to cool a motor or the like can be used as appropriate.

The terminal block 30 is disposed to an upper side of the stator core 8 in the vertical direction, in the vicinity of the end portion A of the stator core 8. The terminal block 30 is disposed horizontally between the two coolant supply channels 20 at the same height as these coolant supply channels 20. The terminal block 30 is made up of a plurality of terminals 32 that are electrically connected to the coils of the stator 6, and a base (omitted from illustration) that holds the terminals. In the present embodiment, the terminals 32 are four terminals 32, which are a U-phase terminal extending from the U-phase coil, a V-phase terminal extending from the V-phase coil, a W-phase terminal extending from the W-phase coil, and a neutral connection terminal extending from a neutral bus bar. The terminal block 30 has these terminals 32 arranged laterally in a row. A cable extends from the terminal block 30 and connects to an inverter that is omitted from illustration. Note that the terminal block 30 can have various configurations based on requests of the motor 2, related inverters, and so forth.

The terminal cooling path 40 is a path that accommodates the terminal block 30, communicates with the coolant supply channel 20, and supplies coolant to the terminals 32. The terminal cooling path 40 is disposed to the upper side of the stator core 8 in the vertical direction, in the vicinity of the end portion A, horizontally and at the same height, so as to bridge between the two coolant supply channels 20. The terminal cooling path 40 according to the present embodiment has an accommodating portion 42 with a hollow portion 42a that accommodates the terminal block 30, and is configured as a hollow conduit through which the coolant flows. The accommodating portion 42 extends so as to bridge space between the two coolant supply channels 20 on the other side in the axial direction (end portion A side) thereof. At both end portions along the extending direction of the accommodating portion 42, communication holes 43 and 44 are provided for communicating with the coolant supply channels 20a and 20b.

The shape of the accommodating portion 42 is not limited in particular, but is formed to have at least sufficient space and volume to allow the coolant to flow therethrough. The accommodating portion 42 can be made of, for example, a resin material, a metal material, or a composite material thereof.

The terminal cooling path 40 has a discharge port 46 at a bottom portion 45 on the lower side of the accommodating portion 42 in the vertical direction, for discharging the coolant toward the coil end 14a protruding from the end portion A. The number of discharge ports 46 is not limited in particular as long as there is at least one, but in terms of the cooling efficiency of the coil end 14a, there are cases in which it is preferable to provide a plurality of the discharge ports 46.

Note that although omitted from illustration, the terminal cooling path 40 may be connected to the casing 2a in order to circulate the coolant toward the casing 2a.

Next, cooling effects at the terminal block 30 and other components of the motor 2 will be described. When the coolant flowing through the motor 2 and the casing 2a of the motor 2 is supplied to the coolant supply channels 20a and 20b by a pump or the like, the coolant flows from the other side in the axial direction (end portion B side) to the one side in the axial direction (end portion A side). The coolant is discharged from the discharge ports 22a, 22b, 24a, and 24b, which are provided in the coolant supply channels 20a and 20b, and the coil end 14b and the stator core 8 are cooled.

When the coolant flowing through the coolant supply channels 20a and 20b reaches the vicinity of the end portion A, the coolant flows into the accommodating portion 42 of the terminal cooling path 40 via the communication holes 43 and 44. The coolant flowing into the terminal cooling path 40 cools the terminals 32 from both end sides along the direction of array of the terminals 32. The coolant is also supplied from the discharge port 46 provided in the bottom portion 45 of the accommodating portion 42 toward the coil end 14a, thereby cooling the coil end 14a.

As described above, the motor 2 is provided with the coolant supply channels 20a and 20b and the terminal cooling path 40, and accordingly the coolant is reliably supplied to the terminal block 30, i.e., the terminals 32, which are effectively cooled. Further, the coil end 14b, the stator core 8, and the coil end 14a can also be cooled.

Also, according to the motor 2, narrow space around the motor 2 and the stator core 8 can be effectively utilized to cool the terminals 32, and further, the coil ends 14a and 14b and the stator core can also be cooled.

In the above embodiment, the terminal cooling path 40 is a hollow conduit that accommodates multiple terminals 32 and through which the coolant flows, but this is not restrictive, and it is sufficient for the coolant to be guided from the coolant supply channels 20a, 20b, and so forth, to the terminals. For example, as illustrated in FIG. 4, a terminal cooling path 140 may be a recessed portion 142 that accommodates the terminals 32 and opens upward in the vertical direction, and communicates with the coolant supply channels 20a and 20b through the communication hole 44. In the case, the coolant is also supplied from the discharge port 146 provided in the bottom portion 145 of the recessed portion 142 toward the coil end 14a, thereby cooling the coil end 14a.

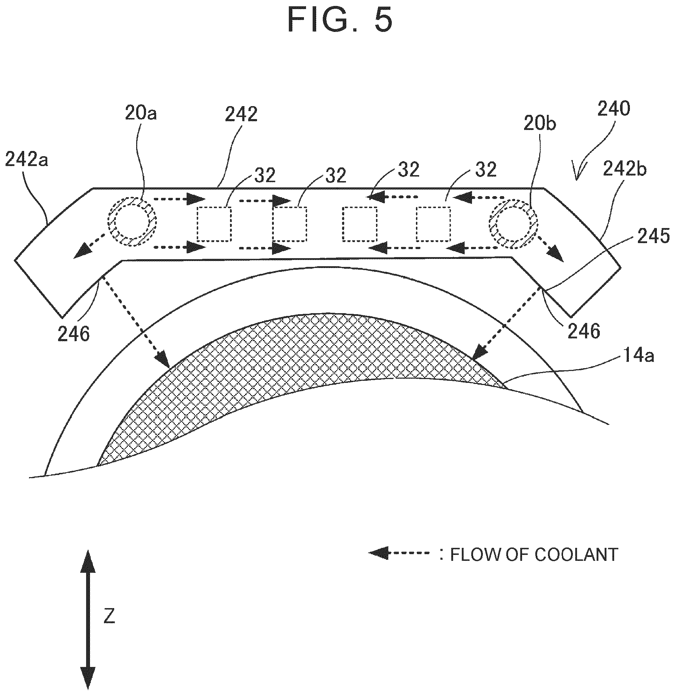

In the above embodiment, the terminal cooling path 40 extends horizontally between the two coolant supply channels 20a and 20b, but this is not restrictive. For example, as illustrated in FIG. 5, a terminal cooling path 240 and the accommodating portion 242 may have a shape in which both end portions 242a and 242b in an extending direction thereof are curved or bent following the peripheral direction of the stator core 8. This allows, for example, discharge ports 246 provided in bottom portions 245 of both end portions 242a and 242b extending from the accommodating portion 242 to discharge the coolant to the coil end 14a with good directionality, and sufficiently.

In the above embodiment, the two coolant supply channels 20a, 20b and the terminal cooling path 40 are at the same height, but this is not restrictive, and the positional relation thereof can be adjusted based on design considerations and the like around the motor 2 and the stator core 8. For example, the terminal cooling path 40 may be disposed on the lower side of the two coolant supply channels 20a and 20b in the vertical direction, or the terminal cooling path 40 may be disposed on the upper side thereof in the vertical direction. In these cases, the coolant supply channels 20a and 20b and the terminal cooling path 40 are configured as appropriate to communicate with each other regardless of differences in height positions.

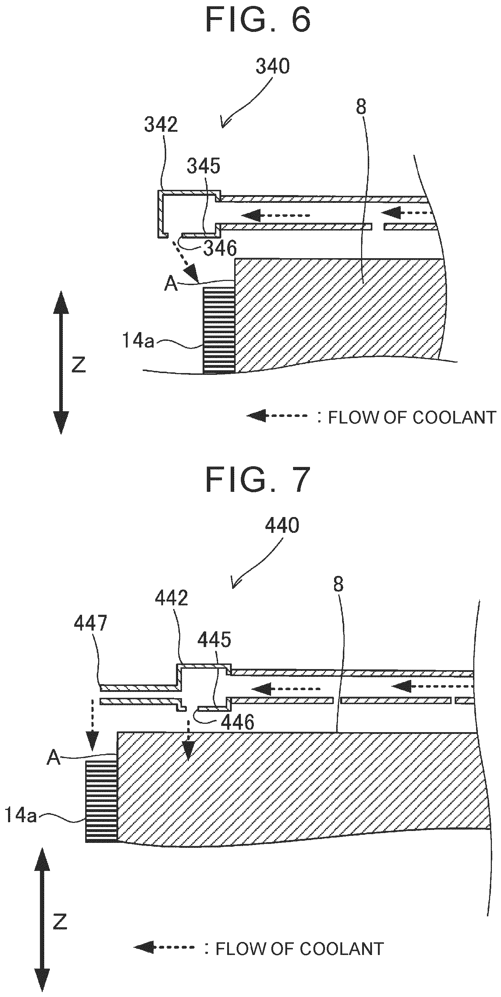

In the above embodiment, the terminal block 30 and the terminal cooling path 40 are provided in the vicinity the end portion A of the stator core 8, but this is not restrictive, and the positions of the terminal block 30 and the terminal cooling path 40 can be set as appropriate in the axial direction of the stator core 8 from the design perspective of the motor 2 and around the stator core 8. For example, as illustrated in FIG. 6, a terminal cooling path 340 accommodating the terminal block 30 may be provided so as to protrude further beyond the end portion A of the stator core 8 in the axial direction. The terminal cooling path 340 can also be provided with a discharge port 346, directed toward the coil end 14a, at a bottom portion 345 on the lower side thereof in the vertical direction. In this case, in order to improve the directionality of the coolant as to the coil end 14a, a coolant guide toward the coil end 14a side may be provided. Also, the terminals 32 and the terminal block 30 may be arranged, for example, laterally in a row parallel to a tangent line of either end portion of the stator core 8 that is closest thereto.

Also, as illustrated in FIG. 7, a terminal cooling path 440 may be recessed and spaced away from the end portion A of the stator core 8, toward the end portion B side of the stator core 8. In this case, the terminal cooling path 440 is provided midway on the coolant supply channels 20a and 20b. In this case, the terminal cooling path 440 may have, at a bottom portion 445 on the lower side thereof in the vertical direction, a discharge port 446 that discharges the coolant toward the stator core 8, and a discharge port 447 that discharges the coolant toward the coil end 14a. Note that in the above description, the terminal cooling paths 40, 240, 340, 440 are described as being arranged on the upper side from the motor 2 or the stator core 8 in the vertical direction, but may also be provided at a position other than upward in the vertical direction, such as to the side of the motor 2 or the stator core 8, for example.

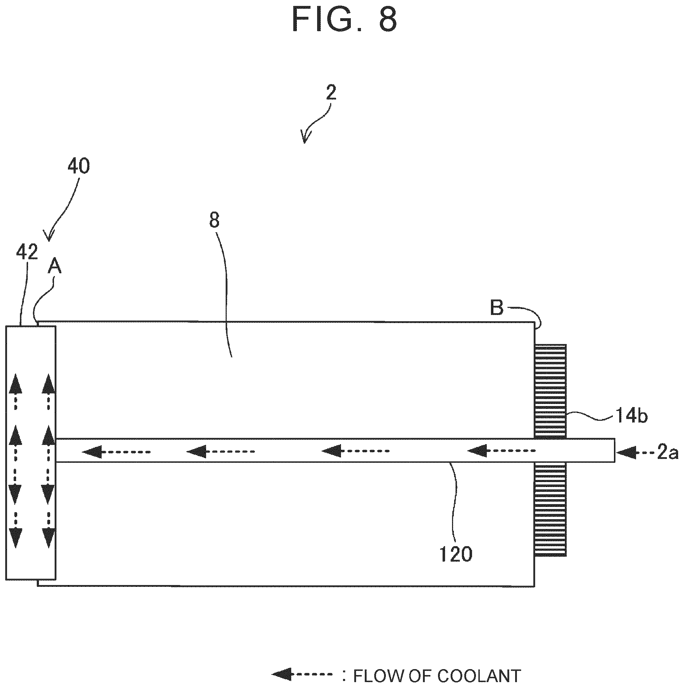

In the above embodiment, two coolant supply channels 20a and 20b are provided, but this is not restrictive, and it is sufficient to provide at least one thereof. For example, as illustrated in the plan view of FIG. 8, a single coolant supply channel 120 may be provided immediately above the stator core 8 in the vertical direction. The coolant supply channel 120 may communicate with the terminal cooling path 40 at any point in the extending direction thereof, and may communicate therewith at a middle portion, for example, as illustrated in FIG. 8. Also, three or more coolant supply channels may be provided. Connection to the terminal cooling path 40 can be set as appropriate.

According to the disclosure of the present specification, the present specification can include the following configurations.
[1] A motor, including a stator core that extends in an axial direction,
   a coil that is wound around the stator core,
   a plurality of terminals connected to the coil, and
   at least one coolant supply channel that is disposed along an outer periphery of the stator core, wherein
   the coolant supply channel includes a terminal cooling path that supplies a coolant to the terminals.
[2] The motor according to [1], in which the terminal cooling path accommodates the terminals and is formed so as to allow the coolant to flow among the terminals.
[3] The motor according to [1] or [2], in which the terminal cooling path is formed to be able to supply the coolant to the stator core and/or the coil end in which the coil is exposed from an end portion of the stator core in the axial direction.
[4] The motor described in any one of [1] to [3], in which the terminal cooling path includes at least one discharge port that discharges the coolant to the stator core and/or the coil end.
[5] The motor according to any one of [1] to [4], in which the terminals are arrayed laterally in a row parallel to a tangent line of an end portion of the stator core that is closest to the terminals.
[6] The motor according to any one of [1] to [5], in which the at least one coolant supply channel includes two coolant supply channels that are disposed at both end sides of the terminals, along an array direction of the terminals.
[7] The motor according to [1], in which the motor has a center of rotation that is substantially perpendicular to the vertical direction,
   the at least one coolant supply channel is disposed along the axial direction of the stator core that is disposed along the center of rotation,
   the terminals are arranged along a substantially horizontal direction above the stator core, and
   the terminal cooling path accommodates the terminals and is formed so as to allow the coolant to flow among the terminals.
[8] The motor according to [7], in which the terminal cooling path includes an end portion extending along a peripheral direction of the stator core.
[9] The motor according to [7] or [8], in which the at least one coolant supply channel includes two coolant supply channels disposed at substantially the same height as each other along the axial direction of the stator core, and
   the terminal cooling path bridges the two coolant supply channels.
[10] The motor according to any one of [7] to [9], in which the terminal cooling path is disposed at the same height as the two coolant supply channels.
[11] The motor according to any one of [7] to [10], in which the terminal cooling path includes a recessed or hollow channel that accommodates the terminals and that also is open upward and communicates with the two coolant supply channels.
[12] The motor according to any one of [7] to [11], in which the terminal cooling path has at least one discharge port that discharges the coolant to the stator core and/or a coil end in which the coil exposed from the end portion along the axial direction of the stator core.

Although the specific examples of the technology disclosed in the present specification have been described in detail above, these are merely exemplary and do not limit the scope of claims. The technology described in the claims includes various modifications and alterations of the specific example exemplified above. The technical elements described in the present specification or illustrated in the drawings exhibit technical utility solely or in various combinations, and are not limited to the combinations described in the claims at the time of filing. The technology illustrated in the present specification or the drawings can achieve a plurality of objects at the same time, and has technical utility in itself by achieving one of the objects.

## Claims

1. A motor (2), comprising:
a stator core (8) that extends in an axial direction of the motor (2);
a coil (14) that is wound around the stator core (8);
a plurality of terminals (32) configured to be connected to the coil (14);
at least one coolant supply channel (20;120) that is disposed along an outer periphery of the stator core (8); and
a terminal cooling path (40;140;240;340;440) that is provided in the coolant supply channel (20;120) and is configured to supply coolant to the terminals (32).

2. The motor (2) according to claim 1, wherein the terminal cooling path (40;140;240;340;440) accommodates the terminals (32) and is disposed so as to allow the coolant to flow among the terminals (32).

3. The motor (2) according to claim 1, wherein the terminal cooling path (40; 140;240;340;440) is disposed so as to supply the coolant to at least one of the stator core (8) and a coil end (14a,14b), the coil end (14a,14b) being included in the coil (14) and exposed from an end portion of the stator core (8) in the axial direction.

4. The motor (2) according to claim 3, wherein the terminal cooling path (40;140;240;340;440) includes at least one discharge port (46;146;246;346;446,447) configured to discharge the coolant to at least one of the stator core (8) and the coil end (14a,14b).

5. The motor (2) according to claim 1, wherein the terminals (32) are arrayed laterally in a row parallel to a tangent line of an end portion of the stator core (8) that is closest to the terminals (32).

6. The motor (2) according to claim 1, wherein the at least one coolant supply channel (20;120) includes two coolant supply channels (20a,20b), the two coolant supply channels (20a,20b) being disposed at both end sides of the terminals (32), along an array direction of the terminals (32).

7. The motor (2) according to claim 1, wherein:
the stator core (8) is disposed along a rotation axis of the motor (2), the rotation axis being an axis perpendicular to a vertical direction, and the at least one coolant supply channel (20;120) being disposed along the axial direction of the stator core (8);
the terminals (32) are arrayed along a horizontal direction upward from the stator core (8); and
the terminal cooling path (40;140;240;340;440) accommodates the terminals (32) and is disposed so as to allow the coolant to flow among the terminals (32).

8. The motor (2) according to claim 7, wherein the terminal cooling path (40;140;240;340;440) includes an end portion (242a,242b) extending along a peripheral direction of the stator core (8).

9. The motor (2) according to claim 7 or 8, wherein the at least one coolant supply channel (20;120) includes two coolant supply channels (20a,20b) along the axial direction of the stator core (8),
the two coolant supply channels (20a,20b) are disposed at the same height as each other, and
the terminal cooling path (40;140;240;340;440) bridges the two coolant supply channels (20a,20b).

10. The motor (2) according to claim 7 or 8, wherein the terminal cooling path (40;140;240;340;440) is disposed at the same height as the at least one coolant supply channel (20;120).

11. The motor (2) according to claim 7 or 8, wherein the terminal cooling path (40;140;240;340;440) includes a recessed or hollow channel that accommodates the terminals (32) and that also is open upward and communicates with the at least one coolant supply channel (20;120).

12. The motor (2) according to claim 11, wherein the terminal cooling path (40;140;240;340;440) includes at least one discharge port (46;146;246;346;446,447) configured to discharge the coolant to at least one of the stator core (8) and a coil end (14a,14b), the coil end (14a,14b) being included in the coil (14) and exposed from an end portion of the stator core (8) in the axial direction.
